# EUROPÄISCHE PATENTSCHRIFT

(11) **EP 3 102 974 B1**
(45) Veröffentlichungstag und Bekanntmachung des Hinweises auf die Patenterteilung: **07.10.2020**
(21) Anmeldenummer: 15706668.9
(22) Anmeldetag: 28.01.2015
(51) Int. Cl.: G02B 27/00

(54) **VERFAHREN ZUR UNTERDRÜCKUNG VON FALSCHLICHT**
METHOD FOR SUPPRESSING STRAY LIGHT
PROCÉDÉ DE SUPPRESSION DE LA LUMIÈRE PARASITE

(30) Priorität: 03.02.2014 DE 102014101310
(43) Veröffentlichungstag der Anmeldung: 14.12.2016
(73) Patentinhaber: Leica Camera AG, 35578 Wetzlar (DE)
(72) Erfinder: KAMMANS, Sigrun, 35745 Herborn (DE)
(74) Vertreter: Stamer, Jan
(86) Internationale Anmeldenummer: PCT/DE2015/100038
(87) Internationale Veröffentlichungsnummer: WO 2015/113559

(56) Entgegenhaltungen:
- WO-A1-2011/085879
- DE-A1- 4 430 778
- DE-A1- 19 949 515
- DE-U1-202010 003 869

## Beschreibung

Die Erfindung betrifft ein Verfahren zur Unterdrückung von über gefasste und ungefasste Bereiche an optischen Elementen in den Nutzstrahlengang der optischen Abbildung geleitetem Falschlicht. Als Falschlicht werden Lichtflüsse in optischen Abbildungssystemen bezeichnet, die nicht der optischen Abbildung eines Objektes dienen und von außerhalb oder innerhalb des durch optische Rechnung bestimmten Nutzstrahlenganges in diesen einfallen. Die Entstehung von Falschlicht kann durch nicht ausreichende Abblendung der Eintrittsöffnung des Abbildungssystems durch Streuung oder Reflexion an Begrenzungen von optischen Bauteilen oder an inneren Flächen des das Abbildungssystem enthaltenden Gehäuses und/oder im Gehäuse vorhandenen Lichtquellen verursacht sein. Falschlicht führt zu einer Bildbeeinträchtigung durch Überstrahlung oder ungleichmäßige Helligkeiten.

Zur Unterdrückung der Entstehung von Falschlicht ist es bekannt, Begrenzungen der optischen Bauteile, wie Randzylinder oder Fasen an Linsen, Kittgliedern, Planscheiben oder Planflächen von Prismen, die nicht zur gewollten optischen Strahlumlenkungsfunktion beitragen, schwarz zu lackieren oder mit einer dünnen absorbierenden Schicht zu bedampfen. Auch können die Durchmesser oder Breiten der optischen Elemente vergrößert und mit Blenden vor der Eintrittsfläche und hinter der Austrittsfläche versehen werden, die den Eintritt der Falschlichtstrahlen in den Nutzstrahlengang der optischen Abbildung verhindern.

Durch einen Lackauftrag an den in eine Fassung einzusetzenden Bereichen kann die Einhaltung von notwendigen Zentriertoleranzen beeinträchtigt werden.

Durchmesser von Linsen mit einer konvexen Fläche können nur soweit vergrößert werden, wie es die Mindestdicke des Randzylinders für Fertigung und Fassung zulässt. Im Allgemeinen sind diese Größen bei der Konstruktion bereits ausgereizt. Vergrößert man den Durchmesser von Linsen oder Scheiben, kann es sein, dass sie nicht mehr in günstiger oder machbarer Reihenfolge für die Montage eingebaut werden können. Auch kann dadurch eine für die Einhaltung von Toleranzen notwendige Führung nicht mehr machbar sein.

Auch bei Prismen kann durch den Auftrag eines Lackes die Einhaltung von notwendigen Lagetoleranzen beeinträchtigt werden. Durch Schwärzung von Flächen, über die das Prisma in einen üblichen Prismenstuhl eingekittet wird, kann nicht genügend UV-Licht in den Kitt gelangen, um diesen auszuhärten. Es kann auch vorkommen, dass der Kitt auf den geschwärzten Flächen nicht haftet. Eine Verbreiterung der Prismen ist aus Platz- und Gewichtsgründen in der Regel nicht möglich und kann auch die Montage erschweren.

Absorbierende dünne Schichten auf Prismenflächen können die Entstehung von Falschlicht wie eine schwarze Lackierung ebenfalls nur dämpfen und nicht gänzlich vermeiden. Ihre Aufbringung auf Flächenbereiche sowie ihre saubere Abtrennung zu Bereichen mit dünnen Schichten zur Reflexsteigerung im Nutzstrahlengang ist sehr aufwändig und damit teuer.

Teilweise ist es möglich, die Entstehung von Falschlicht durch gezieltes Abfräsen von Kanten zu Fasen zu unterdrücken. Das ist jedoch häufig aus fertigungstechnischen, teilweise aus optischen oder mechanischen Gründen nicht möglich, weil dadurch z.B. notwendige Anlageflächen für Justageschritte beseitigt werden. Besonders kritisch ist das bei Dachkanten an Prismen.

Aus der Druckschrift DE 199 49 515 A1 ist eine Kamera mit einem Objektiv und einem Sensor mit einer nichtlinearen Wandelkennlinie bekannt. Zur Vermeidung von aufgrund der gesteigerten Empfindlichkeit des Sensors störenden Reflexen durch Spiegelungen und Streulicht können der Raum zwischen der letzten Linse und dem Sensor, sowie Freiräume zwischen äußeren Linsenrändern und Fassungsteilen mit einem optischen Gel oder einer optischen Flüssigkeit ausgefüllt sein, deren Brechungsindizes dem des Glasmaterials der Linsen weitestgehend angepasst sind. Der Radius der Linse hat in diesem Fall keine optische Wirkung mehr. Die ohne Gel gerechnete Optik funktioniert nicht mehr. Die Einfügung solcher Mittel in den Nutzstrahlengang zwischen den Linsen des Objektivs und dem Raum zum Sensor erfordert eine im Allgemeinen erhebliche Anpassung der Fassung an veränderte Abbildungsstrahlengänge, hervorgerufen durch den Brechungsindex der eingefügten Mittel.

Der Erfindung lag daher die Aufgabe zugrunde, ein Verfahren zur verbesserten Unterdrückung der Entstehung von Falschlicht anzugeben, das bei den genannten optischen Elementen in Abbildungssystemen anwendbar ist, ohne eine Änderung erprobter Fassungs-, Konstruktions- und Justiermethoden durchführen zu müssen.

Diese Aufgabe wird bei einem Verfahren der eingangs genannten Art erfindungsgemäß durch die kennzeichnenden Merkmale des Anspruchs 1 gelöst. Vorteilhafte Weiterbildungen ergeben sich aus den Merkmalen der Unteransprüche.

Der Erfindung liegt das Prinzip zugrunde, vagabundierende Falschlichtstrahlen an den möglichen Streu- und/oder Reflexionsbereichen aus dem Abbildungsstrahlengang herauszuführen und in einer Lichtfalle zu vernichten. Das gelingt durch die Aufbringung einer transparenten Kittschicht an den kritischen Stellen der optischen Elemente und Fassungen. Der Brechungsindex der Kittschicht kann vorzugsweise an den Brechungsindex des optischen Elementes angepasst werden. Die kritischen Bereiche innerhalb einer Fassungskonstruktion können durch Anwendung an sich bekannter Non-Sequential-Raytracing-Programme bei der Entwicklung optischer Systeme ermittelt werden.

Bei Verwendung hoch brechender Gläser für den Abbildungsstrahlengang stehen Kitte oder Kunststoffe mit gleicher Brechzahl im allgemeinen nicht zur Verfügung. Die Anpassung kann in solchen Fällen darin bestehen, die verfügbaren Kitte oder Kunststoffe nach rechnerischer Simulation der Wege der abgeleiteten Falschlichtstrahlen so auszuwählen, dass diese Wege gezielt in eine gewünschte Richtung, bzw. in eine konstruierte Lichtfalle hineingeleitet werden. Es ist jedoch auch möglich, für den Kitt oder Kunststoff auch bei Verfügbarkeit von nahezu gleichen Brechkräften absichtlich eine gegenüber dem optischen Glas abweichende Brechzahl zu wählen, um das Falschlicht besser in die gebildete Lichtfalle leiten zu können.

Die Konstruktion der Fassung ist so auszulegen, dass die für die notwendige orientierte Fixierung des optischen Elementes nach der Justierung zur Verfügung stehenden Anlageflächen möglichst auf die Bereiche beschränkt werden, die zur Weiterleitung von Falschlicht nicht beitragen und notwendige Anlageflächen im übrigen so gering wie möglich gehalten werden. Bei der Fassung von Prismen stehen zumindest Teile des für die Reflexion des Nutzstrahlenganges nicht benötigten Bereiches zur Fixierung zur Verfügung. Bei der Fassung von Linsen-Kittgliedern kann sich die orientierte Fixierung z.B. auf den Linsenrand eines der Kittglieder oder Sektionen des Randes beschränken. Durch die anschließende Auffüllung des Freiraumes mit dem Kitt und evtl. dessen Aushärtung wird die übliche mechanische Stabilität der Lage des optischen Elementes in der Fassung wieder gewährleistet.

Bei einem für die Halterung eines Prismas üblichen Prismenstuhl kann die in dem Bereich der für den Nutzstrahlengang nicht genutzten Auflageflächen liegende Fläche z.B. als Lochraster ausgebildet sein. Die durch die Löcher gebildeten Freiräume werden in dicker Schicht mit dem Kitt aufgefüllt, so dass sich nach dessen Aushärtung eine durchgehende mechanische Auflagefläche ergibt.

Vom Prismenstuhl nicht gehaltene, d.h. ungefasste Bereiche eines Prismas, wie insbesondere eine Dachkante, können in Bereichen außerhalb des Nutzstrahlenganges mit einer transparenten Kappe abgedeckt werden, die über eine ausreichende Kittschicht mit dem Prisma verbunden wird. Die Kappe wirkt zusammen mit der Kittschicht wie ein zusätzlicher Freiraum zum Auffangen von Falschlicht.

Vorzugsweise werden die Innenflächen der Freiräume zusätzlich geschwärzt, so dass sie eine über den Kontakt mit der Kittschicht noch wirksamere Lichtfalle bilden. Soweit sich offene Kittflächen ergeben, wie z.B. bei den erwähnten Löchern im Prismenstuhl, sollten auch diese auf ihrer Außenfläche zusätzlich geschwärzt werden. Ebenso sollten aufgesetzte transparente Kappen auf ihrer Außenseite geschwärzt werden.

Innerhalb der Freiräume können auch zusätzliche mechanische Blenden vorgesehen sein.

In der Zeichnung sind Ausführungsbeispiele für das erfindungsgemäße Verfahren schematisch dargestellt und werden nachfolgend anhand der Figuren näher beschrieben. Dabei zeigen
Fig.1 Fassungen eines Linsen-Kittgliedes,
Fig.2 die Fassung einer seitlich beleuchteten Planplatte und
Fig.3 Lichtfallen an einem Prisma.

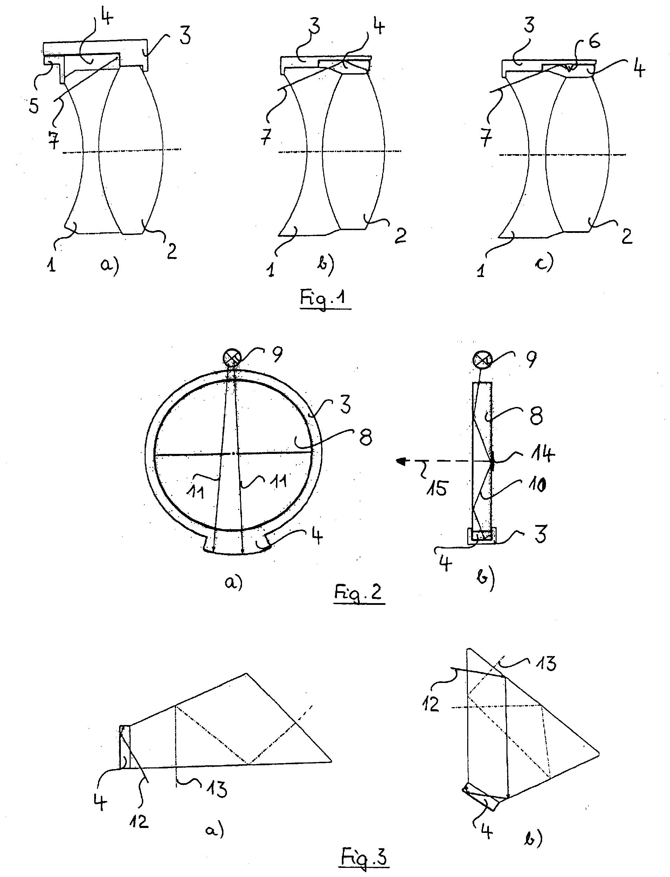

Fig. 1 zeigt einen Schnitt durch ein Linsen-Kittglied 1, 2 mit Schnitt durch eine mechanische Fassung 3, wobei diese nur im oberen Bereich des Schnittes dargestellt ist, tatsächlich aber das Kittglied 1, 2 kreissymmetrisch umschließt. Erfindungsgemäß ist in der Ausführungsform 1a) nur das Linsenglied 2 und in den Ausführungsformen 1a),b) nur das Linsenglied 1 in der Fassung 3 zentriert gehalten. Die Fassung 3 übergreift die Ränder des jeweils anderen Linsengliedes 1 oder 2 ohne unmittelbaren Kontakt mit dem Rand. Der dadurch entstehende Freiraum 4 ist mit einem transparenten Kittmaterial ausgefüllt. Zur Begrenzung des Freiraumes 4 in axialer Richtung ist in Fig. 1a) ein zusätzlicher Abschlussring 5 vorgesehen, um ein Herausquellen des Kittmaterials zu verhindern. In Fig. 1c) wirkt eine zusätzlich eingearbeitete Nase 6 als Leitfläche zur Verteilung des einzufüllenden Kittmaterials über die freien Randflächen des Kittgliedes 1, 2. Die Nase 6 ist aber auch ein Beispiel für eine zusätzliche Blende innerhalb der Lichtfalle.

Der Brechungsindex des Kittmaterials ist an den des beschichteten Linsengliedes 1, 2 angepasst, so dass auf den Rand des Linsengliedes 1, 2 auftreffende Falschlichtstrahlen 7 aus diesem austreten und in dem Kittmaterial gefangen werden. Zusätzlich können die den Freiraum 4 bildende Innenfläche der Fassung 3 und der äußere Randbereich des Kittmaterials zur Reflexionsunterdrückung geschwärzt sein. Der Abschlussring 5 und die Nase 6 wirken zusätzlich als Begrenzung der Lichtfalle.

Das Kittmaterial ist vorzugsweise durch UV-Bestrahlung härtbar, so dass der ausgefüllte Freiraum 4 zusätzlich zur orientierten Halterung des Linsengliedes 1, 2 beiträgt.

In Fig. 2a),b) ist eine in einer Fassung 3 gehaltene und über einen Randbereich seitlich beleuchtete Planplatte 8 dargestellt. Die Planplatte 8 enthält zentral auf einer Fläche eine reflektierende Gitterstruktur 14 z.B. zur Erzeugung eine Leuchtpunktes in Richtung einer schematisch angegebenen Achse 15. Die von einer Lichtquelle 9 ausgehenden Beleuchtungsstrahlen 10 für die Gitterstruktur 14 breiten sich über Totalreflektion an der Planfläche und den Randflächen innerhalb der Planplatte 8 aus.

Die direkt durch die Planplatte 8 laufenden Beleuchtungsstrahlen 11 können die gegenüber liegende Seite der Planplatte 8 so hell erleuchten, dass sie in dem System Falschlicht erzeugen und werden daher in einem Freiraum 4 gefangen, der mit einem transparenten Kittmaterial ausgefüllt ist.

Bei den in Fig. 3a),b) dargestellten Ausführungsbeispielen an Prismen sind Falschlichtstrahlen 12 als Linien und reguläre Abbildungsstrahlen 13 punktiert dargestellt. Die mechanische Fassung, üblicherweise als Prismenstuhl bezeichnet, ist nicht weiter dargestellt. Erfindungsgemäß werden an für das Auftreffen von Falschlichtstrahlen 12 kritischen Stellen des Prismenstuhls gezielt Freiräume 4 in den Prismenstuhl hineinkonstruiert, die dann mit optisch klarem Kitt ausgefüllt werden, so dass Prismenflächen, die an die Freiräume 4 angrenzen sowohl als matte als auch als polierte Flächen transparent sind. Die Innenseiten der Freiräume 4 werden vorzugsweise geschwärzt. Durch das Ausfüllen der Freiräume 4 mit optisch transparentem Material und Schwärzung der Freirauminnenflächen wirken diese als Lichtfallen.

Anstelle eines konstruktiv gebildeten Freiraumes 4 kann an den dafür vorgesehenen Flächenteilen des Prismas auch eine durch das optisch transparente Material gebildete unregelmäßig dicke Beschichtung (Materialtropfen) aufgetragen werden, die auf ihrer Oberfläche zusätzlich geschwärzt sein kann. An diesen Flächenteilen des Prismas auftreffende Falschlichtstrahlen werden dann aus dem Prisma herausgeführt und in der Beschichtung gefangen.

Anstelle einer Freiformbeschichtung kann auch eine Kappe aus optisch transparentem Material auf die vor der Reflektion durch Falschlicht zu schützende Prismenfläche aufgesetzt und mit einem optisch transparenten Material ausgefüllt und damit auf die Prismenfläche aufgeklebt werden. Das ist z.B. bei Dachkantprismen an der Dachkante vorteilhaft.

### Bezugszeichenliste

- 1,2: Linsen-Kittglied
- 3: mechanische Fassung
- 4: Freiraum
- 5: Abschlussring
- 6: Nase
- 7: Falschlichtstrahl
- 8: Planplatte
- 9: Lichtquelle
- 10,11: Beleuchtungsstrahlen
- 12: Falschlichtstrahl
- 13: Abbildungsstrahl
- 14: Gitterstruktur
- 15: Achse

## Patentansprüche

1. Verfahren zur Unterdrückung von über gefasste und ungefasste Bereiche an optischen Elementen in den Nutzstrahlengang der optischen Abbildung geleitetem Falschlicht, **dadurch gekennzeichnet, dass** die mechanische Fassung der optischen Elemente konstruktiv in einen Bereich zur orientierten Fixierung des optischen Elementes in einer Fassung und in einen das optische Element in Form eines Freiraumes überdeckenden Bereich aufgeteilt wird, wobei der Freiraum zur Falschlicht-Unterdrückung mit einem transparenten Kittmaterial ausgefüllt wird und der zur orientierten Fixierung dienende Bereich auf die Bereiche beschränkt wird, die zur Weiterleitung von Falschlicht nicht beitragen.

2. Verfahren nach Anspruch 1, **dadurch gekennzeichnet, dass** der Brechungsindex des Kittmaterials an den des optischen Elementes angepasst wird.

3. Verfahren nach Anspruch 1, **dadurch gekennzeichnet, dass** ein zusätzlicher Freiraum in Form einer transparenten Kappe in einem ungefassten und für den Nutzstrahlengang nicht genutzten Bereich des optischen Elementes auf dieses aufgekittet wird.

4. Verfahren nach Anspruch 1, **dadurch gekennzeichnet, dass** die Freirauminnenflächen geschwärzt werden, wobei das Kittmaterial die Freirauminnenfläche berührt.

5. Verfahren nach Anspruch 1, **dadurch gekennzeichnet, dass** die Außenflächen eines offenen Kittauftrags geschwärzt werden.

6. Verfahren nach Anspruch 1, **dadurch gekennzeichnet, dass** ein durch UV-Bestrahlung härtbares Kittmaterial gewählt wird.

7. Verfahren nach einem der vorhergehenden Ansprüche, **dadurch gekennzeichnet, dass** die Freiräume mit zusätzlichen mechanischen Blenden (5, 6) zum Blockieren der Falschlichtstrahlen versehen werden.

## Claims

1. Method for suppressing stray light guided into the used beam path of the optical imaging by way of mounted and unmounted regions of optical elements, **characterized in that** the mechanical mount of the optical elements is split structurally into a region for oriented fixation of the optical element in a mount and into a region in the form of a free space overlaying the optical element, wherein the free space is filled with a transparent cement material for stray light suppression and the region serving for oriented fixation is limited to the regions which do not contribute to forwarding stray light.

2. Method according to Claim 1, **characterized in that** the refractive index of the cement material is matched to that of the optical element.

3. Method according to Claim 1, **characterized in that** an additional free space in the form of a transparent cap is cemented onto the optical element in a region of the optical element that is unmounted and not used for the used beam path.

4. Method according to Claim 1, **characterized in that** the free space inner surfaces are blackened, wherein the cement material touches the free space inner surface.

5. Method according to Claim 1, **characterized in that** the outer surfaces of an exposed application of cement are blackened.

6. Method according to Claim 1, **characterized in that** a cement material that can be cured by UV irradiation is selected.

7. Method according to any of the preceding claims, **characterized in that** the free spaces are provided with additional mechanical stops (5, 6) for blocking the stray light rays.

## Revendications

1. Procédé de suppression de la lumière parasite guidée à travers des zones montées et non montées sur des éléments optiques dans le trajet des faisceaux utiles, **caractérisé en ce que** la monture mécanique des éléments optiques est divisée, de par sa construction, en une zone destinée à la fixation orientée de l'élément optique dans une monture et en une zone recouvrant l'élément optique à la manière d'un espace libre, dans lequel l'espace libre est rempli d'un matériau de mastic transparent pour supprimer la lumière parasite, et la zone servant à la fixation orientée est limitée aux zones qui ne contribuent pas à la retransmission de la lumière parasite.

2. Procédé selon la revendication 1, **caractérisé en ce que** l'indice de réfraction du matériau de mastic est adapté à celui de l'élément optique.

3. Procédé selon la revendication 1, **caractérisé en ce qu'**un espace libre supplémentaire sous la forme d'un capot transparent est mastiqué sur l'élément optique dans une zone non montée et non utilisée pour le trajet des faisceaux utiles de celui-ci.

4. Procédé selon la revendication 1, **caractérisé en ce que** les surfaces intérieures d'espace libre sont noircies, le matériau de mastic touchant la surface intérieure d'espace libre.

5. Procédé selon la revendication 1, **caractérisé en ce que** les surfaces extérieures d'une application de mastic ouverte sont noircies.

6. Procédé selon la revendication 1, **caractérisé par** la sélection d'un matériau de mastic durcissable par rayonnement UV.

7. Procédé selon l'une quelconque des revendications précédentes, **caractérisé en ce que** les espaces libres sont munis de diaphragmes mécaniques (5, 6) supplémentaires pour bloquer les rayons de lumière parasite.
